Europäisches Patentamt

European Patent Office

Office européen des brevets

(11) Veröffentlichungsnummer: **0 291 691**
**A1**

## (12) EUROPÄISCHE PATENTANMELDUNG

(21) Anmeldenummer: 88105917.4

(22) Anmeldetag: 14.04.88

(51) Int. Cl.⁴: **F16D 3/20** , **F16C 33/20**

Die Bezeichnung der Erfindung wurde geändert (Richtlinien für die Prüfung im EPA, A-III, 7.3).

(30) Priorität: 06.05.87 DE 3714987

(43) Veröffentlichungstag der Anmeldung:
23.11.88 Patentblatt 88/47

(84) Benannte Vertragsstaaten:
DE ES FR GB IT SE

(71) Anmelder: **Glyco-Metall-Werke Daelen & Loos GmbH**
**Stielstrasse 11**
**D-6200 Wiesbaden(DE)**

Anmelder: **SKF GLEITLAGER GMBH**
**Mühlenstrasse 43**
**D-6625 Püttlingen 3(DE)**

(72) Erfinder: **Lucchetti, Werner**
**Erikaweg 14**
**D-6229 Walluf 1(DE)**
Erfinder: **Kottwitz, Bernd**
**Tulpenweg 11**
**D-6625 Püttlingen 3(DE)**

(54) **Universalgelenk zum Einsatz in Drehmomente übertragenden Wellen.**

(57) Ein Universalgelenk zum Einsatz in Drehmomente übertragenden Wellen, enthält einen auf das Ende des einen Wellenteiles aufgesetzten Gelenkkopf (12) mit drei oder mehr sich radial zur Wellenachse auswärts erstreckenden Mitnehmerzapfen (13), auf welchen je eine Mitnehmerrolle (14) mittels einer Gleitlagerbuchse (16) drehbar gelagert ist. Die Gleitlagerbuchse (16) weist in ihrem Inneren als tribologischen Partner für die Umfangsfläche des Mitnehmerzapfens (13) eine Gleitschicht (17) auf, die eine Matrix aus Polyarylketon oder Polyarylsulfon, bevorzugt Polyether-Etherketon oder Polyethersulfon hat. In die Matrix ist Verstärkungsmaterial bevorzugt in Form von Graphit-Kurzfasern mit einer Länge unterhalb 1,0 mm und ggf. die Gleiteigenschaften verbessernder Zusatz, beispielsweise PTFE-Teilchen, eingelagert.

Fig. 1

EP 0 291 691 A1

## Universalgelenk

Die Erfindung betrifft ein Universalgelenk zum Einsatz in Drehmomente übertragenden Wellen, insbesondere Kardanwellen und Teilantriebswellen bei unabhängiger Radaufhängung in Kraftfahrzeugen, bestehend aus einem auf das Ende des einen Wellenteiles aufgesetzten Gelenkkopf mit drei oder mehr sich radial zur Wellenachse auswärts erstreckenden Mitnehmerzapfen, auf welchen je eine Mitnehmerrolle drehbar gelagert ist und einer auf den zweiten Wellenteil aufgesetzten Aufnahmebuchse in deren den Gelenk-Kopf umgebenden Wand sich im wesentlichen axial erstreckende Aufnahmen für die Mitnehmerrollen angebracht sind.

Bei auf dem Markt befindlichen Universalgelenken dieser Art sind die Mitnehmerrolle mittels Nadellagers auf den sie tragenden Mitnehmerzapfen gelagert. Hierdurch werden jedoch erhebliche Mängel hervorgerufen. Insbesondere bedingt diese Art der Lagerung eine erhebliche Verteuerung solcher Universalgelenke, zumal in jedem Universalgelenk zumindest drei derartig gelagerte Mitnehmerrollen vorgesehen sind. Die Lagerung der Mitnehmerrolle mittels Nadellager bedingt nämlich einerseits, daß sowohl die Mitnehmerrolle als auch der Mitnehmerzapfen an den sich gegenüberliegenden Oberflächen gehärtet und hochwertig oberflächenbearbeitet sein müssen. Die Nadellager müssen stirnseitig abgedeckt und geschützt sein. Darüberhinaus wird durch derartige Wälzlager, insbesondere Nadellager, ein hoher Geräuschpegel beim Laufen des Universalgelenkes hervorgerufen. Nicht zuletzt hat ein Nadellager bei Einsatz in einem derartigen Universalgelenk, das erhebliche Drehmomente zu übertragen hat, geringe Lebensdauer. Die Beschädigung auch nur eines Wälzkörpers führt zur sofortiger Zerstörung des gesamten Wälzlagers bzw. Nadellagers und evtl. zum Blockieren des Universalgelenkes, wodurch auch weitere Teile des Universalgelenks erheblich beschädigt werden können.

Demgegenüber ist es Aufgabe der Erfindung, Universalgelenke der angegebenen Art dahingehend zu verbessern, daß erheblich vergrößerte Lebendauer und Beseitigung der Gefahr eines Blockierens des Lagers unter erheblicher Verbilligung des gesamten Aufbaus und Verminderung des Verschleißes in der Lagerung der Mitnehmerrollen erreicht werden.

Diese Aufgabe wird erfindungsgemäß dadurch gelöst, daß jede Mitnehmerrolle des Gelenk-Kopfes mittels einer Gleitlagerbuchse drehbar auf ihrem Mitnehmerzapfen gelagert ist, wobei die Gleitlagerbuchse in ihrer an ihrer Innenseite als tribologischer Partner für die Umfangsfläche des Mitnehmerzapfens vorgesehenen Gleitschicht eine Verstärkungsmaterial und ggf. die Gleiteigenschaften verbessernde Zusätze aufnehmende Matrix aus Polyarylketon oder Polyarylsulfon aufweist.

Bisherige Versuche, in derartigen Universalgelenken die Nadellager durch Gleitlagerbuchsen zu ersetzen, sind fehlgeschlagen weil die Gleitschicht der Gleitlagerbuchse bei Verwendung aller in Betracht gezogenen Gleitwerkstoffe einem schnellen Verschleiß unterworfen war, der zu erheblicher Spielvergrößerung im Universalgelenk führte.

Es hat sich aber unerwartet herausgestellt, daß bei Einsatz einer solchen Gleitlagerbuchse deren als tribologisssscher Partner für die Umfangsfläche des Mitnehmerzapfens vorgesehene Gleitschicht eine Matrix aus Polyarylketon oder Polyarylsulfon aufweist und in dieser Matrix Verstärkungsmaterial und ggf. die Gleiteigenschaften verbessernde Zusätze enthält, den für die Lagerung der Mitnehmerrolle auf den Mitnehmerzapfen gestellten Anforderungen auch über lange Laufzeiten hinweg voll gerecht wird. Besonders hat sich dabei gezeigt, daß sich bei Einsatz solcher Gleitlager buchsen Verschleiß und dessen Folgen sich praktisch nicht bemerkbar machen.

In bevorzugter Ausführungsform der Erfindung ist die Matrix in der Gleitschicht der Gleitlagerbuchse aus Polyether-Etherketon gebildet. Es kommt jedoch auch eine Matrix in der Gleitschicht der Gleitbuchse aus Polyethersulfon in Betracht.

Besonders zweckmäßig im Rahmen der Erfindung ist es, Graphit-Kurzfasern mit einer Länge unter 1,0 mm und Durchmesser zwischen 0,005 mm und 0,03 mm in einem Anteil zwischen 10% bis 45%, bezogen auf das Gewicht der Gleitschicht, als Verstärkungsmaterial in die Matrix einzulagern. Als die Gleiteigenschaften verbessernder Zusatz kommen im Rahmen der Erfindung bevorzugt PTFE-Teilchen mit einer Kornfraktion $\leq 40\ \mu m$ in der Matrix aus Polyarylketon oder Polyarylsulfon in Betracht.

Eine besonders vorteilhafte Weiterbildung der Erfindung besteht darin, daß die Gleitschicht auf einem an der Innenseite der Lagerbuchse vorgesehenen Rauhgrund, vorzugsweise einem aus kugeliger Bronze gebildeten, porösen Sintergerüst, angebracht ist.

Ein Ausführungsbeispiel der Erfindung wird im folgenden anhand der Zeichnung näher erläutert. Es zeigen:

Fig. 1 ein erfindungsgemäßes Universalgelenk mit abgeschnitten dargestellter Aufnahmebuchse und einer Mitnehmerrolle in teilweisem Schnitt;

Fig. 2 eine Teildarstellung des Gelenk-Kopfes mit einem Mitnehmerzahpfen und in herkömmlicher Weise gelagerter Mitnehmerrolle;

Fig. 2a einen Schnitt gem. der Linie IIa-IIa in Fig. 2;

Fig. 3 den Gelenk-Kopf eines Universalgelenks nach Figur 1, dargestellt mit einer vom Mitnehmerzapfen abgenommenen Mitnehmerrolle und

Fig. 4 einen stark vergrößerten Ausschnitt aus dem Aufbau der Gleitlagerbuchse.

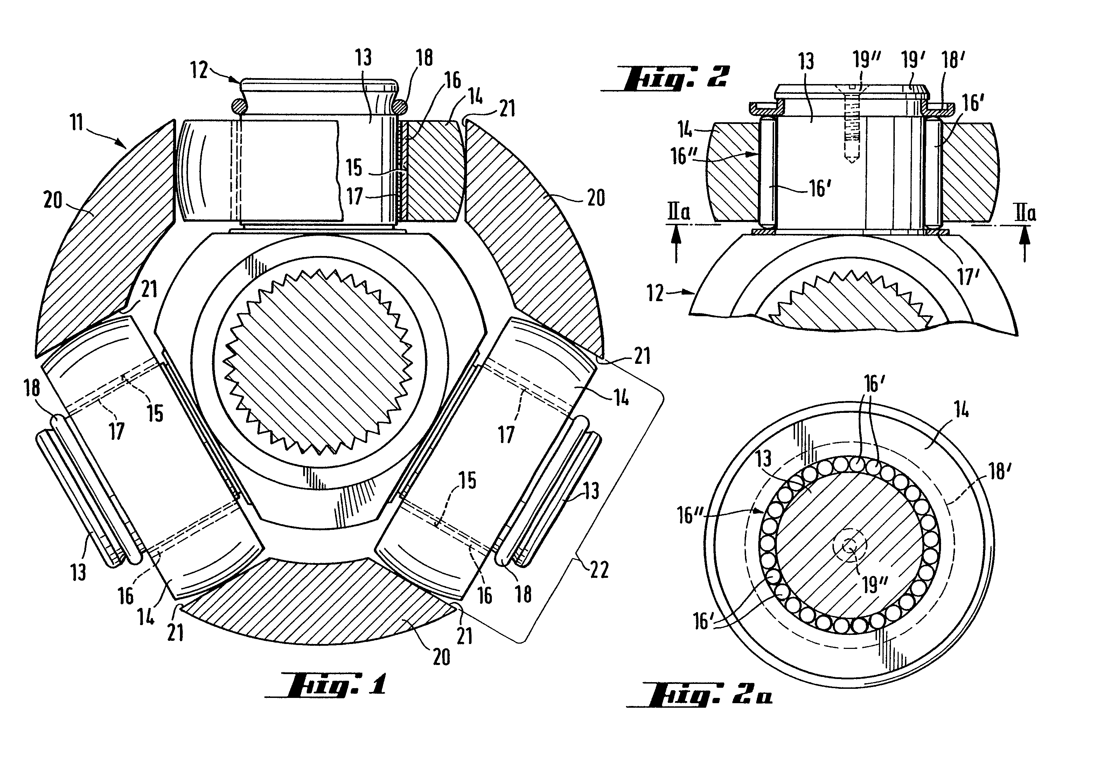

Wie aus Figur 1 ersichtlich, enthält das Universalgelenk 11 einen Gelenk-Kopf 12, der auf den einen Wellenteil aufgesetzt ist und drei in einem Winkelabstand von 120° am Umfang verteilten, sich radial nach auswärts erstreckende Mitnehmerzapfen 13, von welchen jeder eine auf ihm drehbare Mitnehmerrolle 14 trägt. Die Mitnehmerrollen 14 haben eine ballige Umfangsfläche und eine zylindrische mittige Öffnung 15, in die eine Lagerbuchse 16 mit Preßsitz eingesetzt ist. Auf ihrer Innenfläche trägt die Gleitlagerbuchse 16 eine Gleitschicht 17 als tribologischen Partner zur Umfangsfläche des Mitnehmerzapfens 13. Die durch die Mitnehmerrolle 14 und die Gleitlagerbuchse 16 gebildete Einheit ist mittels eines auf den äußeren Endbereich des Mitnehmerzapfens 13 gesetzten einfachen O-Ringes 18 gegen Ablaufen oder Abgleiten vom Mitnehmerzapfen 13 gesichert.

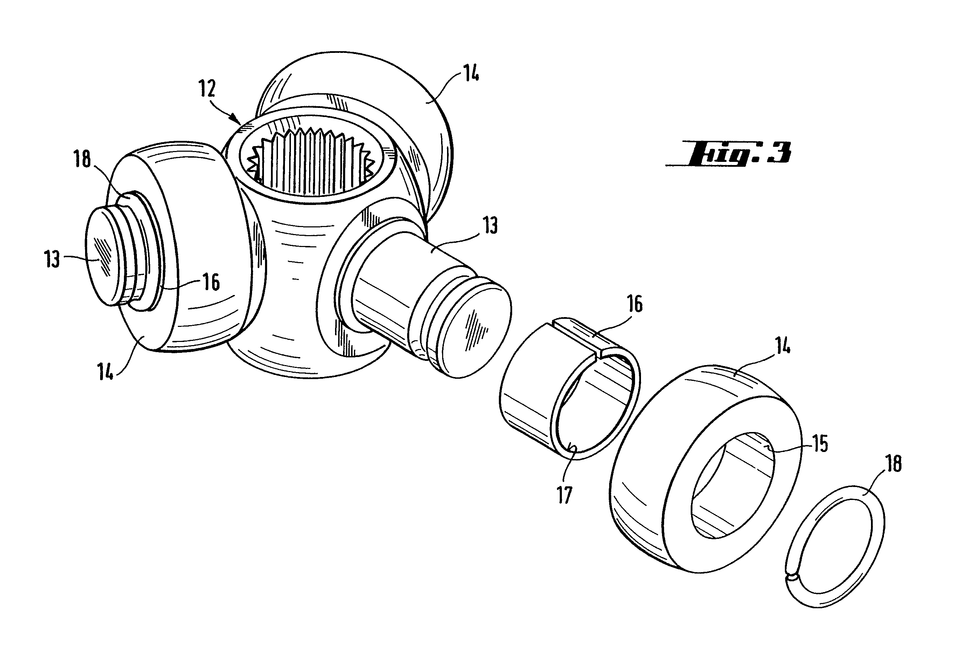

Im Vergleich hierzu zeigt Figur 2 den erheblich komplizierteren Aufbau einer herkömmlichen Lagerung der Mitnehmerrolle 14 auf dem Mitnehmerzapfen 13. Hiernach ist eine Vielzahl von Wälzkörpern bzw. Lagernadeln 16′ zwischen die zylindrische Innenfläche der Mitnehmerrolle 14 und der äußeren Umfangsfläche des Lagerzapfens 13 einzusetzen. Da die Innenfläche der Mitnehmerrolle 14 und die äußere Umfangsfläche des Mitnehmerzapfens 13 unmittelbare Teile der Wälzlageranordnung sind, müssen diese Bauteile im Bereich der genannten Oberflächen gehärtet und an diesen Oberflächen in hoher Güte bearbeitet sein. Die Wälzlagernadeln 16′ müssen stirnseitig gegen Heraustreten aus der Lagerung gesichert werden. Hierzu sind ein innerer Sicherungsring 17′ und ein äußerer Sicherungsring 18′ erforderlich. Zur genauen Führung der Mitnehmerrolle 14 und des Nadellagers 16″ sind ferner eine besondere Halteplatte 19′ mit Halteschraube 19″ auf der äußeren Stirnseite des Mitnehmerzapfens 13 erforderlich. Das Nadellager 16″ erfordert Überwachung und Wartung.

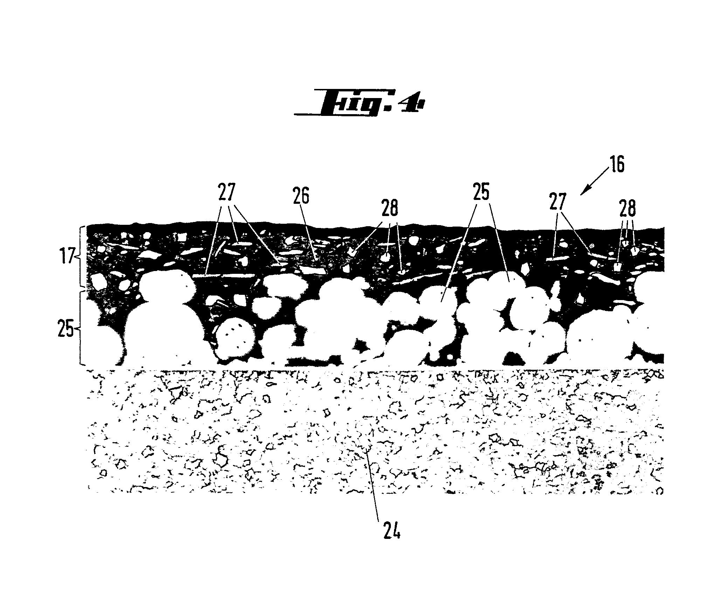

Wie Figur 4 zeigt, weist die Gleitlagerbuchse 16 in diesem Beispiel einen Lagerrücken 24 aus Stahl auf, der an seiner die Gleitschicht 17 tragenden Seite einen Rauhgrund 25 aus kugeliger Bronze als poröses Sintergerüst trägt. Über diesen Rauhgrund 25 ist die eigentliche Gleitschicht 17 geschmolzen, die eine Matrix 26 aus Polyether-Etherketon aufweist. Dabei ist diese Matrix 26 in die Hohlräume des Sintergerüstes 25 eingeschmolzen. In die Matrix 26 sind Graphit-Kurzfasern 27 eingelagert, die eine Länge von weniger als 1,0 mm und einen Durchmesser zwischen 0,005 mm und 0.03 mm aufweisen, und einen Anteil zwischen 10% bit 45%, bezogen auf das Gesamtgewicht der Gleitschicht 17 ausmachen. Ferner sind in die Matrix 26 PTFE-Teilchen 28 als die Gleiteigenschaften verbessernder Zusatz eingelagert. Die Korngröße dieser PTFE-Teilchen 28 ist ≤ 40 μm.

Die Gleitschicht 17 ist aufgrund ihres Matrix-Materials und der eingelagerten PTFE-Teilchen 28 selbstschmierend und praktisch wartungsfrei. Die Mitnehmerrolle 14 kann sich um eine gewisse Weite axial auf den Mitnehmerzapfen 13 hin und her bewegen und dadurch der Innenfläche 21 der entsprechenden axialen Ausnehmung 22 der Aufnahmebuchse 20 optimal folgen (siehe Figur 1).

## Ansprüche

1) Universalgelenk zum Einsatz in Drehmomente übertragenden Wellen, insbesondere Kardanwellen und Teilantriebswellen bei unabhängiger Radaufhängung in Kraftfahrzeugen, bestehend aus einem auf das Ende des einen Wellenteiles aufgesetzten Gelenk-Kopf mit drei oder mehr sich radial zur Wellenachse auswärts erstreckenden Mitnehmerzapfen, auf welchen je eine Mitnehmerrolle drehbar gelagert ist, und einer auf den zweiten Wellenteil aufgesetzten Aufnahmebuchse, in deren den Gelenk-Kopf umgebenden Wand sich im wesentlichen axial erstreckende Aufnahmen für die Mitnehmerrollen angebracht sind, dadurch gekennzeichnet, daß jede Mitnehmerrolle (14) des Gelenk-Kopfes (12) mittels einer Gleitlagerbuchse (16) drehbar auf ihrem Mitnehmerzapfen (13) gelagert ist, wobei die Gleitlagerbuchse (16) in ihrer an ihrer Innenseite als tribologischer Partner für die Umfangsfläche des Mitnehmerzapfens (13) vorgesehenen Gleitschicht (17) eine Verstärkungsmaterial (27) und ggf. die Gleiteigenschaften verbessernde Zusätze (28) aufnehmende Matrix (26) aus Polyarylketon oder Polyarylsulfon aufweist.

2) Universalgelenk nach Anspruch 1, dadurch gekennzeichnet, daß die Matrix (26) in der Gleitschicht (17) der Gleitlagerbuchse (16) aus Polyether-Etherketon gebildet ist.

3) Universalgelenk nach Anspruch 1, dadurch gekennzeichnet, daß die Matrix (26) in der Gleitschicht (17) der Gleitlagerbuchse (16) aus Polyethersulfon gebildet ist.

4) Universalgelenk nach einem der Ansprüche 1 bis 3, dadurch gekennzeichnet, daß Graphit-Kurzfasern (27) mit einer Länge unter 1,0 mm und Durchmesser zwischen 0,005 mm und 0,03 mm in einem Anteil zwischen 10% bit 45%, bezogen auf das Gewicht der Gleitschicht (17), als Verstärkungsmaterial in die Matrix (26) eingelagert sind.

5) Universalgelenk nach einem der Ansprüche 1 bis 4, dadurch gekennzeichnet, daß PTFE-Teilchen mit einer Kornfraktion ≤ 40 μm als die Gleiteigenschaften verbessernder Zusatz (28) in die Matrix (26) eingelagert sind.

6) Universalgelenk nach einem der Ansprüche 1 bis 5, dadurch gekennzeichnet, daß die Gleitschicht (17) auf einem an der Innenseite der Lagerbuchse (16) vorgesehenen Rauhgrund (25), vorzugsweise einem aus kugeliger Bronze gebildeten, porösen Sintergerüst, angebracht ist.

*Fig. 1*

*Fig. 2*

*Fig. 2a*

0 291 691

Fig. 3

0 291 691

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 018 243  (CITROEN)<br>* Anspruch 5 *<br>--- | 1-6 | F 16 D   3/20<br>F 16 C  33/20 |
| Y | GB-A-2 150 464  (DAELEN & LOOS)<br>* Figuren 2,3; Seite 2, Ansprüche<br>9,10,16,18 *<br>--- | 1-6 | |
| Y | FR-E-  84 753  (CITROEN)<br>* Insgesamt *<br>--- | 1-3,6 | |
| Y | EP-A-0 168 869  (KOLBENSCHMIDT)<br>* Ansprüche 2,3,5,7 * | 1-3,6 | |
| A | <br>----- | 4 | |

RECHERCHIERTE SACHGEBIETE (Int. Cl.4)

F 16 D   3/00
F 16 C

Der vorliegende Recherchenbericht wurde für alle Patentansprüche erstellt

| Recherchenort | Abschlußdatum der Recherche | Prüfer |
|---|---|---|
| DEN HAAG | 21-09-1988 | BALDWIN D.R. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes
Dokument

EPO FORM 1503 03.82 (P0403)